(19) Europäisches Patentamt
European Patent Office
Office européen des brevets

(11) **EP 2 862 740 B1**

(12) **EUROPEAN PATENT SPECIFICATION**

(45) Date of publication and mention
of the grant of the patent:
**14.09.2016 Bulletin 2016/37**

(51) Int Cl.:
*B60K 6/48* (2007.10)     *B60W 10/02* (2006.01)
*B60W 10/06* (2006.01)     *B60W 10/08* (2006.01)
*B60W 20/00* (2016.01)     *B60W 30/19* (2012.01)

(21) Application number: **14189447.7**

(22) Date of filing: **17.10.2014**

(54) **Method to control a hybrid vehicle provided with an internal combustion engine supercharged by means of a turbocharger during a gear shift phase**

Verfahren zur Steuerung eines Hybridfahrzeugs mit Verbrennungsmotor, der mittels eines Turboladers während einer Gangschaltphase aufgeladen wird

Procédé pour commander un véhicule hybride équipé d'un moteur à combustion interne suralimenté par un turbocompresseur pendant une phase de changement de rapport

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.10.2013 IT BO20130574**

(43) Date of publication of application:
**22.04.2015 Bulletin 2015/17**

(73) Proprietor: **Magneti Marelli S.p.A.**
**Corbetta (MI) (IT)**

(72) Inventors:
• **Benassi, Daniele**
**40138 Bologna (IT)**

• **Leoni, Andrea**
**06126 Perugia (IT)**
• **Monacelli, Francesco**
**06023 Gualdo Tadino (IT)**
• **Zanotti, Massimo**
**40040 Vado (IT)**

(74) Representative: **Maccagnan, Matteo et al**
**Studio Torta S.p.A.**
**Via Viotti, 9**
**10121 Torino (IT)**

(56) References cited:
**EP-A1- 2 014 499     US-A1- 2011 034 296**

**Description**

TECHNICAL FIELD

The present invention relates to a method to control a hybrid vehicle provided with an internal combustion engine supercharged by means of a turbocharger during a gear shift phase.

PRIOR ART

Hybrid vehicles are becoming increasingly more common, these vehicles comprising an internal combustion engine, which transmits torque to the drive wheels by means of a servo-assisted transmission provided with a servo-assisted mechanical gearbox, and at least one electrical machine, which is electrically connected to an electrical storage system and is mechanically connected to the drive wheels.

Typically, the electrical machine is of the reversible type, i.e. may operate either as motor by drawing electric energy and generating mechanical work, or as generator by drawing mechanical work and generating electric energy, and is driven by an electrical actuating system connected to the electrical storage system suited to store electric energy. Usually, the electrical machine is splined to a lay shaft of the servo-assisted mechanical gearbox and is driven so as to replace the internal combustion engine, e.g. when the servo-assisted clutch remains open; in other words, when the servo-assisted clutch is open, the electrical machine draws energy from the storage system to generate a torque which is equivalent to the torque generated by the internal combustion engine. However, in this configuration, the electrical motor cannot perform some functions (typically, it cannot operate as a starter motor for the internal combustion engine), and it is in an unfavorable condition for performing other functions.

For this reason, a servo-assisted transmission has been suggested comprising a connection device which is suited either to connect a shaft of the reversible electrical machine to an input shaft of the servo-assisted mechanical gearbox, or to connect the shaft of the reversible electrical machine to the lay shaft of the servo-assisted mechanical gearbox, or to keep the shaft of the reversible electrical machine idle (i.e. connected neither to the input shaft nor to the lay shaft).

In this configuration, the reversible electrical machine may be used as starter motor for starting the internal combustion engine when the shaft of the reversible electrical machine is connected to the input shaft of the servo-assisted mechanical gearbox.

Hybrid vehicles of the type described above are known, for example, from EP-A1-2014499 and US-A1-2011034296.

However, the configurations described above have some criticalities. In particular, during normal operation of the hybrid vehicle, when a sudden increase of the torque to be delivered to the drive wheels occurs by means of the driver's request by pressing the accelerator pedal, the internal combustion engine is forced to a very fast transient to transmit the necessary additional torque to the drive wheels, in which transient a sequence of non-stabilized engine points are explored, which do not allow to optimize fuel consumption and cause a noticeable increase of the polluting emissions.

A further drawback occurs when the internal combustion engine is supercharged by means of a turbocharger supercharger system. Indeed, in this case, during a gear shift phase, the chain of air aspirated by the internal combustion engine is corrected to allow the gear shift (in particular, the mass of air aspirated by the internal combustion engine is reduced to allow the gear shift) with the effect that the turbocharger is emptied of part of the air necessary for its optimal operation, thus causing the phenomenon known as "turbo-lag", i.e. the tendency of the turbocharger to lack power response when an increase of torque is requested from a low engine torque condition (low revolutions per minute and low speed) because of the turbine inertia.

DESCRIPTION OF THE INVENTION

It is the object of the present invention to make a method to control a hybrid vehicle provided with an internal combustion engine supercharged by means of a turbocharger during a gear shift phase which is free from the drawbacks of the prior art and which is easy and cost-effective to implement.

According to the present invention, a method to control a hybrid vehicle provided with an internal combustion engine supercharged by means of a turbocharger during a gear shift phase is provided as claimed in the appended claims.

BRIEF DESCRIPTION OF THE DRAWINGS

The present invention will now be described with reference to the accompanying drawing, which illustrates a non-limiting examplary embodiment, in which the figure is a diagrammatic view of a servo-assisted transmission for a hybrid vehicle which implements the control method according to the present invention.

PREFERRED EMBODIMENTS OF THE INVENTION

In the accompanying figure, numeral 1 indicates as a whole a servo-assisted transmission for a hybrid vehicle propelled by a supercharged internal combustion engine 2, which is provided with a driving shaft 3, which rotates at an angular speed $\omega m$. In particular, it is a vehicle with hybrid engine and parallel architecture.

The servo-assisted transmission 1 comprises a servo-assisted mechanical gearbox 4, which is provided with an input shaft 5, which rotates at an angular speed $\omega_1$ and is connectable to the driving shaft 3 by means of a servo-assisted clutch 6, and a lay shaft 7, which rotates at an angular speed $\omega_2$ and is connected to a differential 8, which transmits motion to the drive wheels by means of two axle shafts 9.

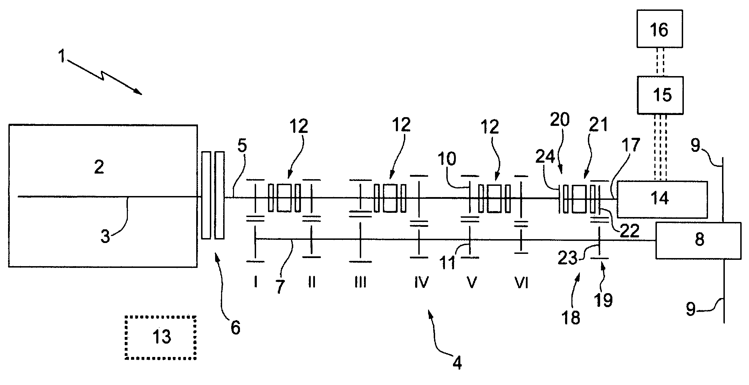

The servo-assisted gearbox 4 shown in figure 1 comprises six forward gears indicated by Roman numerals (first gear I, second gear II, third gear III, fourth gear IV, fifth gear V and sixth gear VI). The input shaft 5 and the lay shaft 7 are reciprocally and mechanically coupled by means of a plurality of gear pairs, each of which defines a corresponding gear and a comprises a primary gear 10 mounted on the input shaft 5 and a secondary gear 11 mounted on the lay shaft 7.

Each primary gear 10 is idly mounted on the input shaft 5 and permanently meshes with the respective secondary gear 11; instead, each secondary gear 11 is splined to the lay shaft 7 to rotate in integral manner with the shaft 7 itself. Furthermore, the servo-assisted mechanical gearbox 4 comprises three synchronizers 12, each of which is mounted coaxially to the input shaft 5, is arranged between two primary gears 10, and is suited to be actuated to engage the two primary gears 10 of the input shaft 5 alternatively (i.e. to make the two primary gears 10 alternatively and angularly integral with the input shaft 5). In other words, each synchronizer 12 may be displaced either in one direction to engage a primary gear 10 onto the input shaft 5, or in the other direction to engage the other primary gear 10 onto the input shaft 5.

The servo-assisted mechanical gearbox 4 is actuated by a hydraulic servo-control to drive the synchronizers 12 to engage and disengage the gears; the servo-controlled clutch 6 is also actuated by a hydraulic servo-control to connect and disconnect the driving shaft 3 to/from the input shaft 5. The servo-assisted transmission 1 comprises a control unit 13 (diagrammatically shown), which drives the hydraulic servo-controls of the servo-assisted mechanical gearbox 4 and the servo-assisted clutch 6.

According to a different embodiment (not shown and perfectly equivalent to the above-described embodiment), the primary gears 10 are splined to the input shaft 5, the secondary gears 11 are idly mounted on the lay shaft 7 and the synchronizers 12 are mounted on the lay shaft 7 for engaging the secondary gears 11 on the lay shaft 7 itself.

Furthermore, the servo-assisted transmission 1 comprises a reversible electrical machine 14 (i.e. which may operate either as a motor by drawing electrical energy and generating mechanical work, or as a generator by drawing mechanical work and generating electric energy) driven by an electrical actuator 15 connected to at least one battery 16 suited to store electric energy.

The reversible electrical machine 14 comprises a shaft 17, which is integral to a rotor of the reversible electrical machine 14, is normally idle (i.e. mechanically connected in permanent manner neither to the input shaft 5 nor to the lay shaft 7), and is mechanically connectable to the input shaft 5.

The servo-assisted transmission 1 comprises a connection device 18 suited either to connect the shaft 17 of the reversible electrical machine 14 to the input shaft 5 of the servo-assisted mechanical gearbox 4, or to connect the shaft 17 of the reversible electrical machine 14 to the lay shaft 7 of the servo-assisted mechanical gearbox 4, or to maintain the shaft 17 of the reversible electrical machine 14 idle (i.e. connected neither to the input shaft 5, nor to the lay shaft 7).

According to the preferred embodiment shown in the accompanying figures, the connection device 18 comprises a gear transmission 19 interposed between the shaft 17 of the reversible electrical machine 14 and the lay shaft 7 of the servo-assisted mechanical gearbox 4, a direct drive transmission 20 interposed between the shaft 17 of the reversible electrical machine 14 and the input shaft 5, and a synchronizer 21, suited to alternatively engage either the gear transmission 19 or the direct drive transmission 20.

Preferably, the gear transmission 19 has a non-unitary transmission ratio and comprises a gear 22 idly mounted on the shaft 17 of the reversible electrical machine 14 and a gear 23 which is splined to the lay shaft 7 and permanently meshes with the gear 22; the synchronizer 21 is suited to engage the gear 22 of the shaft 17 of the reversible electrical machine 14 to connect the shaft 17 of the reversible electrical machine 14 to the lay shaft 7. The value of the non-unitary transmission ratio value of the gear transmission 19 is such to optimize the revolutions per minute and torque values of the reversible electrical machine 14 with respect to the revolutions per minute and the torque transmitted by the lay shaft 7; normally, the gear transmission 19 comprises a reduction of revolutions per minute, i.e. the reversible electrical machine 14 turns slower than the lay shaft 7.

The direct drive transmission 20 has a unitary transmission ratio and comprises a connection element 24 fitted onto the lay shaft 5; the synchronizer 21 is suited to engage the connection element 24 onto the shaft 17 of the reversible electrical machine 14 to connect the shaft 17 of the reversible electrical machine 14 to the input shaft 5.

According to a different embodiment (not shown), the direct drive transmission 20 is replaced by a further gear transmission, which is arranged between the shaft 17 of the reversible electrical machine 14 and the input shaft 5, has a non-unitary transmission ratio and is entirely similar to the gear transmission 19. Also in this case, the non-unitary transmission ratio value of the further gear transmission is such to optimize the revolutions per minute and torque values of the reversible electrical machine 14 with respect to the revolutions per minute and the torque transmitted by the lay shaft 5; normally, the gear transmission comprises a reduction of revolutions per minute, i.e. the reversible electrical machine 14 rotates slower than the lay shaft 5.

The internal combustion engine 2 is supercharged by means turbocharger supercharging system.

The internal combustion engine 2 comprises a variable number of cylinders, each of which is connected to an intake manifold by means of at least one respective intake valve and to an exhaust manifold by means of at least one respective exhaust valve (not shown). The intake manifold receives fresh air (i.e. air coming from the external environment) through an intake duct, which is provided with an air cleaner and is adjusted by a throttle valve.

The supercharging system of the internal combustion engine 2 comprises a turbocharger provided with a turbine, which is arranged along the exhaust pipe in order to rotate at high speed under the bias of the exhaust gases expelled from the cylinders, and a compressor, which is arranged along the intake pipe and is mechanically connected to the turbine in order to be fed rotatably by the turbine itself and thus to increase the pressure of the air fed into the feeding pipe.

A bypass pipe is arranged along the exhaust pipe and is connected in parallel to the turbine so that its ends are connected upstream and downstream of the turbine itself; a wastegate valve is arranged along the bypass pipe, which is suited to regulate the flow of exhaust gases which flow through the bypass pipe and is controlled by a pneumatic actuator. A bypass pipe is arranged along the intake pipe and is connected in parallel to the compressor so that its ends are connected upstream and downstream of the compressor itself; a Poff valve is arranged along the bypass pipe, suited to adjust the exhaust gas flow flowing through the bypass pipe and driven by an electrical actuator.

The internal combustion engine 2 is controlled by an electronic control unit 13, which governs the operation of all the components of the internal combustion engine 2, including the supercharging system. In particular, the control unit 13 operates the actuators of the wastegate valve and of the Poff valve.

Below is described the control method implemented by the control unit 13 during a gear shift phase to reduce the turbo lag, i.e. the tendency of the turbocharger to lack power response when a sudden, rapid considerable request for torque occurs (i.e. when the driver presses the accelerator pedal with decision, i.e. to overtake) from a low torque condition (low revolutions per minute and slow speed) because of the turbine inertia.

In use, when there is no gear shift and the vehicle is traveling (i.e. the internal combustion engine 2 is running and the servo-assisted clutch 6 closed), the shaft 17 of the reversible electrical machine 14 is normally connected to the input shaft 5 and the reversible electrical machine 14 operates as a generator of electric energy to deliver the electric energy required by the electrical devices of the vehicle. If the vehicle slows down, the reversible electrical machine 14 may maximize (compatibly with the charge state of the battery 16 and with the vehicle dynamics) the draw of mechanical energy to obtain a regenerative braking of the vehicle.

The control unit 13 is provided to recognize when there is an interruption in the transmission of torque C to the drive wheels during a gear shift due to the opening position of the servo-assisted clutch 6.

In this case, when the torque C necessary for the drive wheels is generated by the internal combustion engine 2 and then an interruption in the transmission of the torque C to the drive wheels occurs during a gear shift due to the opening position of the servo-assisted clutch 6, the reversible electrical machine 14 is provided to operate as electrical motor by drawing electric energy from the battery 16 to deliver an additional torque ("electrical boost"). In other words, the reversible electrical machine 14 is provided to operate as generator of electric energy to deliver the electric energy necessary to generate the torque C to be delivered to the drive wheels for the entire turbo lag interval. Hereinafter, "turbo lag interval" means the interval of time during which, due to a gear shift, the chain of the air aspirated by the internal combustion engine 2 is corrected to allow the gear shift (in particular, the mass of air aspirated by the internal combustion engine 2 is reduced to allow the gear shift) with the effect that the turbocharger is emptied of part of the air necessary for its optimal operation, thus causing the turbo lag phenomenon.

Since the control unit 13 is configured to reduce the tendency of the turbocharger to lack power response when an increase of torque occurs from a low torque condition (low revolutions per minute and slow speed), the turbo lag interval only ends in the moment in which the turbocharger is filled with the amount of air needed for its optimal operation (as will be described in greater detail below).

In particular, turbo lag interval only ends in the moment in which the turbocharger is in the same efficiency point where it was in the moment in which the interruption in torque C to the drive wheels occurred during a gear shift. The efficiency point is the engine point in which the turbocharger has the same efficiency that it had in the moment in which the interruption in the transmission of torque C to the drive wheels occurred during a gear shift. The efficiency point is simply the engine point in which the turbocharger has the same performance that it had in the moment in which the interruption in the transmission of torque C to the drive wheels occurred during a gear shift.

The control unit 13 is provided to determine an objective torque $C_{m\_obj}$ to be delivered following the interruption in the transmission of torque C to the drive wheels due to a gear shift during the turbo lag interval.

The control unit 13 is thus provided to control the reversible electrical machine 14 so that it operates as generator of torque to deliver the necessary electric energy according to the following formula:

$$C_{tot\_e} = \Delta E(C_{m\_obj}) + C_{e\_}[1]$$

wherein

$C_e$: electric energy delivered by the reversible electrical machine 14 for the operation of the electrical devices of the hybrid vehicle in the instant in which there is an interruption in the transmission of torque C to the drive wheels during a gear shift due to the opening position of the servo-assisted clutch 6;

$\Delta E(C_{m-obj})$: additional electric energy delivered by the reversible electrical machine 14 to guarantee the objective torque $C_{m-obj}$ to be delivered following the interruption in the transmission of the torque C to the drive wheels due to a gear shift during the turbo lag interval; and

$E_{tot}$: total electric energy required from the reversible electrical machine 14 in the instant in which there is an interruption in the transmission of the torque C to the drive wheels during a gear shift due to the opening position of the servo-assisted clutch 6.

Obviously, the control unit 13 is provided to check that the charge state of the battery 16 is such to guarantee the supply of additional electric energy $\Delta E(C_{m\_obj})$ to guarantee the objective torque $C_{m\_obj}$ to be delivered following the interruption in the torque C to the drive wheels due to a gear shift during the turbo lag interval.

In other words, the control unit 13 is provided to check that the battery state 16 is sufficient to deliver the total electric energy $E_{tot}$ required from the reversible electrical machine 14 in the instant in which an interruption in the transmission of torque C to the drive wheels occurs during a gear shift, i.e. which is such to guarantee both the delivery of the additional electric energy $\Delta E(C_{m\_obj})$ and the objective torque $C_{m\_obj}$ to the drive wheels and to be able to fulfill the requests of the electrical devices of the hybrid vehicle.

According to a first variant, if the result of this check is negative (i.e. if the charge state of the battery 16 is not sufficient to deliver the total electric energy $E_{tot}$ required from the reversible electrical machine 14 in the instant in which there is an interruption in the transmission of torque C to the drive wheels during a gear shift, i.e. to guarantee both the delivery of the additional electric energy $\Delta E(C_{m\_obj})$ to guarantee the objective torque $C_{m\_obj}$ to the drive wheels and to be able to fulfill the requests of the electrical devices of the hybrid vehicle), then the control unit 13 is provided to control the reversible electrical machine 14 so that it operates as electric energy generator to only provide the electric energy needed to fulfill the requests of the electrical devices of the hybrid vehicle.

In other words, if the result of the check is negative (i.e. if the charge state of the battery 16 is not sufficient to deliver the total electric energy $E_{tot}$ required from the reversible electrical machine 14 and is such to guarantee both the delivery of the additional electric energy $\Delta E(C_{m\_obj})$ to guarantee the objective torque $C_{m\_obj}$ to the drive wheels and the delivery to be able to fulfill the requests of the electrical devices of the hybrid vehicle), then the objective torque $C_{m\_obj}$ will not be transmitted to the drive wheels.

According to an alternative, if the result of this check is negative (i.e. if the charge state of the battery 16 is not sufficient to deliver the total electric energy $E_{tot}$ required from the reversible electrical machine 14 in the instant in which an interruption in the transmission of torque C to the drive wheels occurs during a gear shift, i.e. to guarantee both the delivery of the additional electric energy $\Delta E(C_{m\_obj})$ to guarantee the objective torque $C_{m\_obj}$ to the drive wheels and the delivery to be able to fulfill the requests of the electrical devices of the hybrid vehicle), then the control unit 13 is provided to control the reversible electrical machine 14 to make it operate as electric energy generator to deliver in all cases the electric energy $E_{av}$ available at the moment, the value of which will be lower than the additional electric energy $\Delta E(C_{m\_obj})$ to guarantee the objective torque $C_{m\_obj}$ and presumably will not be sufficient for the entire turbo lag interval but will in all cases allow to improve driving comfort.

Instead, if the result of the check is positive (i. e. if the battery charge state 16 is sufficient to deliver the total electric energy $E_{tot}$ required from the reversible electrical machine 14 in the instant in which an interruption in the transmission of torque C to the drive wheels occurs during a gear shift, i.e. to guarantee both the delivery of the additional electric energy $\Delta E(C_{m\_obj})$ to guarantee the objective torque $C_{m\_obj}$ to the drive wheels and to fulfill the requests of the electrical devices of the hybrid vehicle), then the control unit 13 is suited to control the reversible electrical machine 14 so that it operates as generator of electric energy to deliver the total electric energy $E_{tot}$.

In yet other words, if the result of the check is positive (i.e. if the charge state of the battery 16 is sufficient to deliver the total electric energy $E_{tot}$ required from the reversible electrical machine 14 and is such to guarantee both the delivery of the additional electric energy $\Delta E(C_{m\_obj})$ to guarantee the objective torque $C_{m\_obj}$ to the drive wheels and the delivery to fulfill the requests of the electrical devices of the hybrid vehicle), the objective torque $C_{m\_obj}$ to the drive wheels is delivered by the reversible electrical machine 14.

It is important to note that the actuation of the reversible electrical machine 14 is practically immediate and it is possible to supply the objective torque $C_{m\_obj}$ following the interruption in the transmission of torque C to the drive wheels due to the gear shift during the turbo lag interval with a substantially negligible transient.

Subsequently, after the end of the gear shift phase, the control unit 13 is suited to check that the turbo lag interval has ended, i.e. that the turbocharger has been filled again with the amount of air necessary for its optimal operation and if the turbocharger is in the same efficiency point where it was before the interruption in the transmission of torque C to the drive wheels during a gear shift.

If the result is positive, then the necessary torque C will be delivered to the drive wheels only by the internal combustion engine 2.

If the result is negative, then the necessary torque C will be delivered to the drive wheels by the internal combustion engine 2 and integrated by the electrical machine 14 until the end of the turbo lag interval.

In particular, the control unit 13 is suited to determine the additional torque $\Delta C_m$ to be delivered to the drive wheels starting from the instant in which the gear shift phase ends by means of the following formula:

$$\Delta C_m = C'_{m\_obj} - C_{m\_} [2]$$

wherein

$\Delta C_m$ : additional torque to be delivered to the drive wheels starting from the instant in which the gear shift phase ends and to the end of the turbo lag interval;

$C'_{m\_obj}$: objective torque such to guarantee the fulfillment of the driver's request by pressing the accelerator pedal; and

$C_m$: torque delivered by the internal combustion engine (2) starting from the instant in which the gear shift step ends.

The additional torque $\Delta C_m$ to be delivered starting from the instant in which the gear shift phase ends until the end of the turbo lag interval calculated by means of [2] is delivered to the reversible electrical machine 14 to the drive wheels.

The control unit 13 is thus provided to control the reversible electrical machine 14 so that it draws electric energy to deliver the necessary mechanical torque according to the following formula:

$$E_{tot} = \Delta E(C_m) + E_{i\_} [3]$$

wherein

$E_i$: electric energy delivered by the reversible electrical machine 14 for operating the electrical devices of the hybrid vehicle in the instant in which the gear shift phase ends and until the end of the turbo lag interval;

$\Delta E(\Delta C_m)$ : additional electric energy delivered by the reversible electrical machine 14 to guarantee the additional torque $\Delta C_m$ to the drive wheels in the instant in which the gear shift phase ends and until the end of the turbo lag interval; and

$E_{tot}$: total electric energy requested to the electrical machine 14 in the instant in which the gear shift phase ends and until the end of the turbo lag interval.

Obviously, also in this case, the control unit 13 is provided to check that the charge state of the battery 16 is such to guarantee that the delivery of additional electric energy $\Delta E(\Delta C_m)$ to guarantee the additional torque $\Delta C_m$ to the drive wheels in the instant in which the gear shift phase ends and until the end of the turbo lag interval.

In other words, the control unit 13 is provided to check that the battery state 16 is sufficient to deliver the total electric energy $E_{tot}$ required from the reversible electrical machine 14 in the instant in which the gear shift phase ends and until the end of the turbo lag interval, i. e. which is such to guarantee both the delivery of the additional electric energy $\Delta E(\Delta C_m)$ to guarantee the additional torque $\Delta C_m$ to the drive wheels and to be able to fulfill the requests of the electrical devices of the hybrid vehicle.

If the result of this check is negative (i.e. if the charge state of the battery 16 is not sufficient to deliver the total electric energy $E_{tot}$ required from the reversible electrical machine 14 in the instant in which the gear shift phase ends and until the end of the turbo lag interval, i. e. to guarantee both the delivery of the additional electric energy $\Delta E(\Delta C_m)$ necessary for the additional torque $\Delta C_m$ to the drive wheels and to be able to fulfill the requests of the electrical devices of the hybrid vehicle), then the control unit 13 is provided to control the reversible electrical machine 14 so that it operates as electric energy generator to deliver only the electric energy needed to fulfill the requests of the electrical devices of the hybrid vehicle.

In other words, if the result of the check is negative (i.e. if the charge state of the battery 16 is not sufficient to deliver the total electric energy $E_{tot}$ required from the reversible electrical machine 14 and is such to guarantee both the delivery of the additional electric energy $\Delta E(\Delta C_m)$ to guarantee the additional torque $\Delta C_m$ to the drive wheels and to be able to fulfill the requests of the electrical devices of the hybrid vehicle), the additional torque $\Delta C_m$ to the drive wheels is delivered by the internal combustion engine 2.

Instead, if the result of this check is positive (i. e. if the charge state of the battery 16 is sufficient to deliver the total electric energy $E_{tot}$ required from the reversible electrical machine 14 in the instant in which the gear shift phase ends and until the end of the turbo lag interval, i.e. to guarantee both the delivery of the additional electric energy $\Delta E(\Delta C_m)$ necessary to the additional torque $\Delta C_m$ to the drive wheels and to be able to fulfill the requests of the electrical devices of the hybrid vehicle), then the control unit 13 is provided to control the reversible electrical machine 14 so that it operates as electric energy generator to supply the total electric energy $E_{tot}$.

In yet other words, if the result of the check is positive (i.e. if the charge state of the battery 16 is sufficient to deliver the total electric energy $E_{tot}$ required from the reversible electrical machine 14 and is such to guarantee both the delivery of the additional electric energy $\Delta E(\Delta C_m)$ to guarantee the additional torque $\Delta C_m$ to the drive wheels and to be able to fulfill the requests of the electrical devices of the hybrid vehicle), the additional torque $\Delta C_m$ to the drive wheels is delivered by the reversible electrical machine 14 which intervenes as booster.

It is important to mention that, also in this case, the actuation of the reversible electrical machine 14 is nearly immediate and it is possible to supply the additional torque $\Delta C_m$ in the instant in which the gear shift phase ends and until the end of the turbo lag interval with a substantially negligible transient.

In the transition time between instants $t_1$ and $t_2$ (wherein $t_1$ is the instant in which the gear shift phase ends and $t_2$ is the instant in which the turbo lag interval ends) the objective torque $C'_{m\_obj}$ is given by the sum of the two contributions according to the following equation:

$$C'_{m\_obj} = C_{m\_i} + C_{me\_i\_} \; [4]$$

$$t_1 \; < \; i \; < \; t_{2\_}$$

wherein

$C'_{m\_obj}$: objective torque such as to guarantee the fulfillment of the request for torque C in the instant in which the gear shift step ends and until the end of the turbo lag interval;

$C_{m\_i}$: torque delivered by the internal combustion engine 2 in the i-th instant; and

$C_{me\_i}$: torque delivered by the reversible electrical machine 14 in the i-th instant.

The torque $C_{me\_i}$ delivered by the reversible electrical machine 14 has the maximum value in the instant $t_1$, in which the gear shift phase ends; in this instant, the reversible electrical machine 14 entirely supplies the additional torque $\Delta C_m$ calculated by means of [2] to the drive wheels.

The trend of the torque $C_{me\_i}$ delivered by the reversible electrical machine gradually decreases and the minimum value in the instant $t_2$ in which the reversible electrical machine 14 operates again only to deliver the electric energy needed to the electrical devices of the hybrid vehicle.

In the transition time between instants $t_1$ and $t_2$, the torque $C_{me\_i}$ delivered by the reversible electrical machine 14 is equal to a (gradually decreasing) fraction of the objective torque $C'_{m\_obj}$ such to guarantee the fulfillment of the request for torque C.

The torque $C_{m\_i}$ delivered by the internal combustion engine 2 has instead a minimum value in the instant $t_1$ in which the gear shift phase ends. The trend of the torque $C_{m\_i}$ delivered by the internal combustion engine is gradually increasing and assumes the maximum value in the instant in which $t_2$ is equal to the objective torque $C'_{m\_obj}$ such to guarantee the fulfillment of the request for torque C.

In the transition time between instants $t_1$ and $t_2$, the torque $C_{m\_i}$ delivered by the internal combustion engine 2 is equal to a fraction (gradually increasing) of the objective torque $C'_{m\_obj}$ such to guarantee the fulfillment of the request for torque C.

According to a preferred variant, the control unit 13 is provided in order for the gradually increasing trend of the torque $C_{m\_i}$ delivered by the internal combustion engine 2 (until the objective torque $C_{m\_obj}$ is reached such to guarantee the fulfillment of the request for torque C) allows to explore a sequence of stabilized engine points which guarantee the optimization of the performance of the internal combustion engine 2 on a case-by-case basis.

In the transition time between instants $t_1$ and $t_2$, the additional torque $\Delta C_m$ to be delivered to the drive wheels calculated by means of [2] is thus given by the sum of two contributions: a first contribution of gradually increasing amplitude caused by the torque $C_{m\_i}$ delivered by the internal combustion engine 2 until the end of the turbo lag interval and a second contribution of gradually decreasing amplitude caused by the torque $C_{e\_i}$ delivered by the reversible electrical machine 14 until the end of the turbo lag interval.

The control unit 13 is thus configured to recognize the condition in which the turbocharger is in the same efficiency point as the instant $t_1$ in which an interruption in the transmission of torque C to the drive wheels during a gear shift phase due to the opening position of the servo-assisted clutch 6 was recognized. This condition will occur in an instant $t_2$, starting from which the turbo lag interval may be considered concluded and starting from which the control unit 13 is configured to control the reversible electrical machine 14 again only to supply the electric energy needed by the electrical devices of the hybrid vehicle.

According to a different embodiment (not shown), the connection device 18 comprises a pair of clutches, which replace the synchronizer 21 and which are arranged between the shaft 17 of the reversible electrical machine 14 and the input shaft 5 and the lay shaft 7, respectively.

The description above may be advantageously applied also to a hybrid vehicle with serial architecture or to a hybrid vehicle with mixed/parallel architecture.

The control method of a hybrid vehicle described above has the advantage of allowing the reversible electrical machine 14 to perform the booster function to obtain the additional torque $\Delta C_m$ to the drive wheels with a transient which is substantially negligible and again in the most favorable conditions, i.e. so as to optimize fuel consumption and reduce polluting emissions during the entire turbo lag interval.

Furthermore, the control method of a hybrid vehicle described above prevents the driver from perceiving a lack of response of the internal combustion engine 2 facing a request for increasing torque C following a gear shift due to the opening position of the servo-assisted clutch 6. In other words, the control method of the hybrid vehicle described hitherto allows the gear shift phase to be substantially transparent (i.e. perceived in reduced manner) by the driver and to allow to reduce the turbo lag in significant manner.

**Claims**

1. A method to control a hybrid vehicle provided with an internal combustion engine (2), which is supercharged by means of a turbocharger, a servo-assisted transmission (1) and a reversible electrical machine (14), which is provided to generate a torque (C) to be transmitted to the drive wheels; the method comprises the steps of:

   recognizing an interruption in the transmission of the torque (C) to the drive wheels during a gear shift, due to the opening position of a servo-assisted clutch (6);
   calculating an objective torque ($C_{m\_obj}$) to be delivered to the drive wheels in the instant ($t_1$), in which an interruption in the transmission of the torque (C) to the drive wheels during a gear shift, due to the opening position of the servo-assisted clutch (6), is recognized;
   controlling the reversible electrical machine (14) so as to deliver the objective torque ($C_{m\_obj}$) to the drive wheels in the instant ($t_1$), in which an interruption in the transmission of the torque (C) to the drive wheels during a gear shift, due to the opening position of the servo-assisted clutch (6), is recognized, until the instant ($t_2$), in which the condition is recognized, in which the turbocharger has the same efficiency of the instant ($t_1$), in which an interruption in the transmission of the torque (C) to the drive wheels during a gear shift is recognized.

2. A control method according to claim 1, wherein the reversible electrical machine (14) is connected to a storage system (16), which is suited to store electric energy; the method comprises the further steps of:

   learning the charge state of the storage system (16); and
   controlling the reversible electrical machine (14) so as to deliver the objective torque ($C_{m\_obj}$) to the drive wheels, only in case the charge state of the storage system (16) is sufficient to deliver the objective torque ($C_{m\_obj}$).

3. A control method according to claim 2 and comprising the further steps of:

recognizing the instant in which the gear shift step ends; and
determining an additional torque ($\Delta C_m$) to be delivered to the drive wheels starting from the instant in which the gear shift step ends by means of the following formula:

$$\Delta C_m = C'_{m\_obj} - C_m \quad [2]$$

wherein

$\Delta C_m$ additional torque to be delivered to the drive wheels through the reversible electrical machine (14) starting from the instant in which the gear shift step ends and until the instant ($t_2$), in which the condition is recognized, in which the turbocharger has the same efficiency of the instant ($t_1$), in which an interruption in the transmission of the torque (C) to the drive wheels during a gear shift is recognized;
$C'_{m\_obj}$ objective torque such as to guarantee the fulfillment of the request for torque (C) in the instant in which the gear shift step ends and until the instant ($t_2$), in which the condition is recognized, in which the turbocharger has the same efficiency of the instant ($t_1$), in which an interruption in the transmission of the torque (C) to the drive wheels during a gear shift is recognized; and
$C_m$ torque delivered by the internal combustion engine (2) starting from the instant in which the gear shift step ends.

4. A control method according to claim 3, wherein the objective torque ($C'_{m\_obj}$) results from the following equation::

$$C'_{m\_obj} = C_{m\_i} + C_{me\_i} \quad [4]$$
$$t_1 < i < t_2$$

wherein

$C'_{m\_obj}$ objective torque such as to guarantee the fulfilment of the request for torque (C) in the instant in which the gear shift step ends and until the instant ($t_2$), in which the condition is recognized, in which the turbocharger has the same efficiency of the instant ($t_1$), in which an interruption in the transmission of the torque (C) to the drive wheels during a gear shift is recognized;
$C_{m\_i}$ torque delivered by the internal combustion engine (2) in the i-th instant;

$C_{m\_i}$ torque delivered by the reversible electrical machine (14) in the i-th instant;

$t_1$ instant in which an interruption in the transmission of the torque (C) to the drive wheels during a gear shift, due to the opening position of the servo-assisted clutch (6), is recognized; and

$t_2$ instant in which the condition is recognized, in which the turbocharger has the same efficiency of the instant ($t_1$), in which an interruption in the transmission of the torque (C) to the drive wheels during a gear shift is recognized.

## Patentansprüche

1.  Verfahren zur Steuerung eines Hybridfahrzeugs, das mit einem mittels eines Turboladers aufgeladenen Verbrennungsmotor (2), einem servounterstützten Getriebe (1) und einer umkehrbaren elektrischen Maschine (14) versehen ist, welche zur Erzeugung eines an die Antriebsräder zu übertragenden Drehmoments (C) vorgesehen ist;
    welches Verfahren die Schritte enthält:

    Erkennen einer Unterbrechung in der Übertragung des Drehmoments (C) an die Antriebsräder während eines Gangschaltvorgangs anhand der geöffneten Position einer servounterstützten Kupplung (6);
    Berechnen eines Zieldrehmoments ($C_{m\_obj}$), welches in dem Moment ($t_1$) an die Antriebsräder abgegeben werden soll, in welchem eine Unterbrechung in der Übertragung des Drehmoments (C) an die Antriebsräder während eines Gangschaltvorgangs anhand der geöffneten Position einer servounterstützten Kupplung (6) erkannt wird;
    Steuern der umkehrbaren elektrischen Maschine (14) dergestalt, dass sie das Zieldrehmoment ($C_{m\_obj}$) an die Antriebsräder in dem Moment ($t_1$), in welchem eine Unterbrechung in der Übertragung des Drehmoments (C) an die Antriebsräder während eines Gangschaltvorgangs anhand der geöffneten Position der servounterstützten Kupplung (6) erkannt wird, bis zu dem Moment ($t_2$) abgibt, in welchen der Zustand erkannt wird, in welchem der Turbolader dieselbe Wirksamkeit wie im Moment ($t_1$) hat, in welchem eine Unterbrechung der Übertragung des Drehmoments (C) an die Antriebsräder während eines Gangschaltvorgangs erkannt wurde.

2.  Steuerungsverfahren nach Anspruch 1, wobei die umkehrbare elektrische Maschine (14) mit einem Speichersystem (16) verbunden ist, das zur Speicherung von elektrischer Energie geeignet ist; wobei das Verfahren die weiteren Schritte enthält:

Erkennen des Ladungszustands des Speichersystems (16); und
Steuern der umkehrbaren elektrischen Maschine (14) dergestalt, dass sie das Zieldrehmoment ($C_{m\_obj}$) nur in dem Fall an die Antriebsräder abgibt, wenn der Ladungszustand des Speichersystems (16) ausreichend ist, um das Zieldrehmoment ($C_{m\_obj}$) abzugeben.

3.  Steuerungsverfahren nach Anspruch 2, enthaltend die weiteren Schritte:

    Erkennen des Moments, in welchem der Gangschaltvorgang endet; und
    Bestimmen eines zusätzlichen Drehmoments ($\Delta C_m$), das an die Antriebsräder beginnend mit dem Moment abgegeben werden soll, in welchem der Gangschaltvorgang endet, mittels der folgenden Formel:

    $$\Delta C_m = C'_{m\_obj} - C_m \quad [2]$$

    worin

    $\Delta C_m$ zusätzliches Drehmoment, das durch die umkehrbare elektrische Maschine (14) beginnend mit dem Moment, in welchem der Gangschaltvorgang endet und bis zu dem Moment ($t_2$) an die Antriebsräder abzugeben ist, in welchem der Zustand erkannt wird, in welchem der Turbolader dieselbe Wirksamkeit wie im Moment ($t_1$) hat, in welchem eine Unterbrechung der Übertragung des Drehmoments (C) an die Antriebsräder während eines Gangschaltvorgangs erkannt wurde;
    $C'_{m\_obj}$ Zieldrehmoment, um so die Erfüllung der Anforderung von Drehmoment (C) in dem Moment, in welchem der Gangschaltvorgang endet, und bis zu dem Moment ($t_2$) sicherzustellen, in welchem der Zustand erkannt wird, in welchem der Turbolader dieselbe Wirksamkeit wie im Moment ($t_1$) hat, in welchem eine Unterbrechung der Übertragung des Drehmoments (C) an die Antriebsräder während eines Gangschaltvorgangs erkannt wurde; und
    $C_m$ von dem Verbrennungsmotor (2) beginnend mit dem Moment, in welchem der Gangschaltvorgang endet, abgegebenes Drehmoment.

4.  Steuerungsverfahren nach Anspruch 3, wobei das Zieldrehmoment ($C'_{m\_obj}$) aus der folgenden Gleichung resultiert:

$$C'_{m\_obj} = C_{m\_i} + C_{me\_i} \quad [4]$$
$$t_1 < i < t_2$$

worin

C'$_{m\_obj}$ Zieldrehmoment, um so die Erfüllung der Anforderung von Drehmoment (C) in dem Moment, in welchem der Gangschaltvorgang endet, und bis zu dem Moment ($t_2$) sicherzustellen, in welchem der Zustand erkannt wird, in welchem der Turbolader dieselbe Wirksamkeit wie im Moment ($t_1$) hat, in welchem eine Unterbrechung der Übertragung des Drehmoments (C) an die Antriebsräder während eines Gangschaltvorgangs erkannt wurde;

C$_{m\_i}$ von dem Verbrennungsmotor (2) in dem i-ten Moment abgegebenes Drehmoment;

C$_{me\_i}$ von der umkehrbaren elektrischen Maschine (14) in dem i-ten Moment abgegebenes Drehmoment;

$t_1$ Moment, in welchem eine Unterbrechung der Übertragung des Drehmoments (C) zu den Antriebsrädern während eines Gangschaltvorgangs anhand der geöffneten Position der servounterstützten Kupplung (6) erkannt wird; und

$t_2$ Moment, in welchem der Zustand erkannt wird, in welchem der Turbolader dieselbe Wirksamkeit wie in dem Moment ($t_1$) hat, in welchem eine Unterbrechung der Übertragung des Drehmoments (C) zu den Antriebsrädern während eines Gangschaltvorgangs erkannt wurde.

**Revendications**

1.  Méthode de commande d'un véhicule hybride équipé d'un moteur à combustion interne (2) qui est suralimenté par un turbocompresseur, d'une transmission assistée (1) et d'une machine électrique réversible (14) qui est prévue pour générer un couple (C) à transmettre aux roues motrices ;
    la méthode comprend les étapes de :

    reconnaissance d'une interruption dans la transmission du couple (C) aux roues motrices pendant un changement de vitesse, due à la position d'ouverture d'un embrayage assisté (6) ;
    calcul d'un couple objectif (C$_{m\_obj}$) à fournir aux roues motrices dans l'instant ($t_1$), dans lequel une interruption dans la transmission du couple (C) aux roues motrices pendant un changement de vitesse, due à la position d'ouverture de l'embrayage assisté (6), est reconnue ;
    commande de la machine électrique réversible (14) de sorte à fournir le couple objectif (C$_{m\_obj}$)

    aux roues motrices dans l'instant ($t_1$), dans lequel une interruption dans la transmission du couple (C) aux roues motrices pendant un changement de vitesse, due à la position d'ouverture de l'embrayage assisté (6), est reconnue jusqu'à l'instant ($t_2$), dans lequel la condition est reconnue, dans laquelle le turbocompresseur a la même efficacité de l'instant ($t_1$), dans lequel une interruption dans la transmission du couple (C) aux roues motrices pendant un changement de vitesse est reconnue.

2.  Méthode de commande selon la revendication 1, dans laquelle la machine électrique réversible (14) est reliée à un système de stockage (16) qui est adapté pour stocker de l'énergie électrique ; la méthode comprend les étapes supplémentaires de :

    prise de connaissance de l'état de charge du système de stockage (16) ; et
    commande de la machine électrique réversible (14) de sorte à fournir le couple objectif (C$_{m\_obj}$) aux roues motrices, seulement dans le cas où l'état de charge du système de stockage (16) est suffisant pour fournir le couple objectif (C$_{m\_obj}$).

3.  Méthode de commande selon la revendication 2 et comprenant les étapes supplémentaires de :

    reconnaissance de l'instant, dans lequel l'étape de changement de vitesse se termine ; et
    détermination d'un couple supplémentaire ($\Delta C_m$) à fournir aux roues motrices à partir de l'instant dans lequel l'étape de changement de vitesse se termine à l'aide de la formule suivante :

$$\Delta C_m = C'_{m\_obj} - C_m \quad [2]$$

    dans laquelle

    $\Delta C_m$ le couple supplémentaire à fournir aux roues motrices par la machine électrique réversible (14) à partir de l'instant dans lequel l'étape de changement de vitesse se termine et jusqu'à l'instant ($t_2$), dans lequel la condition est reconnue, dans lequel le turbocompresseur a la même efficacité de l'instant ($t_1$), dans lequel une interruption dans la transmission du couple (C) aux roues motrices pendant un changement de vitesse est reconnue ;
    C'$_{m\_obj}$ le couple objectif de sorte à garantir la satisfaction à la demande de couple (C) dans l'instant dans lequel l'étape de changement de vitesse se termine et jusqu'à l'instant ($t_2$), dans lequel la condition est reconnue, dans lequel le turbocompresseur a la même efficacité de l'instant ($t_1$), dans lequel une interruption dans la transmission du couple (C) aux roues motrices pendant un changement de vitesse est reconnue ; et $C_m$ le couple fourni par le moteur à combustion interne (2) à partir de l'instant dans lequel l'étape de changement de vitesse se termine.

4. Méthode de commande selon la revendication 3, dans laquelle le couple objectif ($C'_{m\_obj}$) résulte de l'équation suivante :

$$C'_{m\_obj} = C_{m\_i} + C_{me\_i} \quad [4]$$

$$t_1 < i < t_2$$

dans laquelle

$C'_{m\_obj}$ le couple objectif de sorte à garantir la satisfaction à la demande de couple (C) dans l'instant dans lequel l'étape de changement de vitesse se termine et jusqu'à l'instant ($t_2$), dans lequel la condition est reconnue, dans lequel le turbocompresseur a la même efficacité de l'instant ($t_1$), dans lequel une interruption dans la transmission du couple (C) aux roues motrices pendant un changement de vitesse est reconnue ;
$C_{m\_i}$ le couple fourni par le moteur à combustion interne (2) dans l'i-ème instant ;
$C_{me\_i}$ le couple fourni par la machine électrique réversible (14) dans l'i-ème instant ;
$t_1$ l'instant dans lequel une interruption dans la transmission du couple (C) aux roues motrices pendant un changement de vitesse, due à la position d'ouverture de l'embrayage assisté (6), est reconnue ; et
$t_2$ l'instant dans lequel la condition est reconnue, dans laquelle le turbocompresseur a la même efficacité de l'instant ($t_1$), dans lequel une interruption dans la transmission du couple (C) aux roues motrices pendant un changement de vitesse est reconnue.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2014499 A1

- US 2011034296 A1